# FASCICULE DE BREVET EUROPEEN

(11) **EP 1 047 567 B1**
(45) Date de publication et mention de la délivrance du brevet: **11.12.2002**
(21) Numéro de dépôt: 98966633.4
(22) Date de dépôt: 16.12.1998
(51) Int. Cl.: B60C 15/06, B60C 3/04

(54) **BOURRELET DE PNEUMATIQUE AVEC ELEMENTS DE RENFORT CIRCONFERENTIELS**
REIFENWULST MIT IN UMFANGSRICHTUNG ORIENTIERTEN FESTIGKEITSTRÄGERN
TYRE BEAD WITH REINFORCING CIRCUMFERENTIAL ELEMENTS

(30) Priorité: 12.01.1998 FR 9800290
(43) Date de publication de la demande: 02.11.2000
(73) Titulaire: Compagnie Generale Des Etablissements Michelin-Michelin & Cie, 63040 Clermont-Ferrand Cédex 09 (FR)
(72) Inventeur: AUXERRE, Pascal, F-63130 Royat (FR)
(74) Mandataire: Diernaz, Christian
(86) Numéro de dépôt international: EP9808263
(87) Numéro de publication internationale: WO99034991

(56) Documents cités:
- EP-A- 0 724 973
- FR-A- 2 483 854
- FR-A- 2 654 988
- PATENT ABSTRACTS OF JAPAN vol. 017, no. 041 (M-1359), 26 January 1993 & JP 04 260806 A (SUMITOMO RUBBER IND LTD), 16 September 1992
- PATENT ABSTRACTS OF JAPAN vol. 008, no. 227 (M-332), 18 October 1984 & JP 59 109406 A (YOKOHAMA GOMU KK), 25 June 1984
- PATENT ABSTRACTS OF JAPAN vol. 012, no. 201 (M-707), 10 June 1988 & JP 63 008006 A (YOKOHAMA RUBBER CO LTD:THE), 13 January 1988

## Description

La présente invention concerne un pneumatique à armature de carcasse radiale destiné à porter de lourdes charges, et plus particulièrement un pneumatique de type "Poids Lourds", destiné à équiper des véhicules tels que, par exemple, les camions, tracteurs routiers, autobus, remorques et autres, et plus particulièrement la nouvelle structure de renforcement des bourrelets dudit pneumatique.

En général, un pneumatique du type considéré comprend une armature de carcasse formée d'au moins une nappe de câbles métalliques, ancrée dans chaque bourrelet à au moins une tringle, en formant un retournement. L'armature de carcasse est radialement surmontée d'une armature de sommet, composée d'au moins deux nappes de câbles métalliques, croisés d'une nappe à la suivante en formant avec la direction circonférentielle des angles compris entre 10° et 45°. Les retournements d'armature de carcasse sont généralement renforcés par au moins une nappe de renforcement de bourrelet formée de câbles métalliques orientés à un faible angle par rapport à la direction circonférentielle, compris généralement entre 10° et 30°.

Dans le cas de la présence d'une seule nappe de renforcement de bourrelet, cette dernière est généralement située axialement à l'extérieur, le long du retournement d'armature de carcasse, avec une extrémité radialement supérieure située au dessus ou au dessous de l'extrémité radialement supérieure du retournement d'armature de carcasse. Quant à l'extrémité radialement inférieure d'une telle nappe de renforcement, elle est généralement située sur une droite parallèle à l'axe de rotation et passant approximativement par le centre de gravité de la section méridienne de la tringle d'ancrage de l'armature de carcasse.

La solution connue a pour but d'éviter la déradialisation des câbles du retournement de l'armature de carcasse, ainsi que de minimiser les déformations radiales et circonférentielles subies par l'extrémité dudit retournement, et par la couche de caoutchouc extérieure recouvrant le bourrelet et assurant la liaison avec la jante.

La durée de vie des pneumatiques "Poids-Lourds", du fait des progrès accomplis, du fait que certains roulages sont rendus moins pénalisants en ce qui concerne l'usure de la bande de roulement, est devenue telle qu'il est encore nécessaire d'améliorer l'endurance des bourrelets. Ladite amélioration doit porter sur la dégradation des couches de caoutchouc au niveau des extrémités de retournement d'armature de carcasse et extrémités radialement extérieures des nappes de renforcement de bourrelets. Plus particulièrement dans le cas de pneumatiques soumis à des roulages prolongés, roulages induisant souvent une température élevée des bourrelets, du fait des températures atteintes par les jantes de montage, les mélanges de caoutchouc en contact avec la jante sont alors sujets à une diminution de leurs rigidités, ainsi qu'à une oxydation plus ou moins lente, d'où une tendance très marquée de l'armature de carcasse à se dérouler autour de la tringle sous l'effet de la pression de gonflage intérieure, malgré la présence d'une ou plusieurs nappes de renforcement de bourrelets. Prennent alors naissance des mouvements de tringle, des déformations de cisaillement à toutes les extrémités de nappes, pour aboutir à la destruction du bourrelet. Ladite amélioration doit aussi, et principalement, porter sur cette deuxième possibilité de dégradation.

L'armature de carcasse d'un pneumatique radial, monté sur sa jante de service et gonflé à la pression recommandée, a dans un flanc un profil méridien régulièrement convexe entre approximativement les zones de raccordement avec le profil méridien de l'armature de sommet et avec le bourrelet. En particulier, à partir du rayon où l'armature de carcasse subit l'influence de la(des) nappe(s) de renforcement de bourrelets, ladite armature possède un profil méridien sensiblement rectiligne ou même incurvé dans le sens opposé à l'incurvation dans les flancs, c'est-à-dire sensiblement parallèle à la courbure des rebords de jante à partir d'un point d'inflexion situé radialement approximativement au niveau de l'extrémité radialement supérieure de la nappe de renforcement de bourrelets, placée le long du retournement d'armature de carcasse. Une telle architecture conduit à des bourrelets de pneumatiques relativement épais.

Les problèmes d'endurance cités ci-dessus, qui sont influencés par la température de fonctionnement des bourrelets, ont été, en très faible partie, résolus par une structure de bourrelet très renforcée. Le brevet FR 2 654 988, correspondant au préambule de la revendication 1, décrit un pneumatique, particulièrement adapté pour véhicules lourds, avec une armature de carcasse radiale formée d'éléments de renforcement inextensibles et ancrée dans chaque bourrelet. Ledit bourrelet est renforcé par deux nappes de câbles d'acier, une première nappe retournée autour de la tringle pour former deux brins, une deuxième nappe disposée axialement à l'intérieur de la partie principale de l'armature de carcasse. Lesdits problèmes peuvent aussi être résolus par une structure de bourrelet dite amincie, par exemple obtenue par les moyens décrits dans le brevet FR 2 451 016 qui enseigne, dans ce but, de conférer à la paroi extérieure du pneumatique, comprise entre le point où ladite paroi quitte le contact de la jante et le point où ladite paroi atteint sa distance maximale par rapport au plan équatorial, une concavité relativement importante, lorsque le pneumatique est monté sur sa jante de service et gonflé à la pression recommandée.

Une telle disposition devient insuffisante, en particulier lorsque le rapport de la hauteur sur jante H sur la largeur axiale maximale S du pneumatique diminue, et se doit d'être améliorée lorsque les charges supportées deviennent supérieures ou les pressions de gonflage inférieures aux charges et pressions recommandées.

Les recherches de la demanderesse ont permis d'arriver à la conclusion que l'amincissement des bourrelets devait être réalisé non pas par l'extérieur du pneumatique, mais par l'intérieur, et qu'il devait l'être en combinaison avec des caractéristiques précises de renforcement desdits bourrelets.

Afin d'améliorer l'endurance des bourrelets d'un pneumatique, pour véhicule destiné à porter de lourdes charges, ledit pneumatique, conforme à l'invention, comprend au moins une armature de carcasse radiale, formée d'au moins une nappe d'éléments de renforcement inextensibles et ancrée dans chaque bourrelet B à au moins une tringle pour former un retournement, chaque bourrelet B étant renforcé par une armature additionnelle de renforcement formée d'éléments métalliques, disposée axialement à l'intérieur de ladite partie non retournée de ladite armature de carcasse. Il est caractérisé en ce que, vue en section méridienne, l'armature de carcasse a un profil méridien dont le tracé, compris entre le point A de plus grande largeur axiale et le premier point de tangence T avec la couche d'enrobage quasi-circulaire de la tringle d'ancrage, est convexe sur toute sa longueur, et tel que l'épaisseur ε du bourrelet B, mesurée sur une perpendiculaire audit profil méridien en un point C de hauteur h_{C}, comprise entre 30 et 40 mm et mesurée par rapport à la base de bourrelet YY', soit comprise entre 2,5 et 3,0 fois l'épaisseur e du flanc mesurée sur la droite D" ligne de plus grande largeur axiale, ladite armature de carcasse étant renforcée, dans sa partie non retournée, par l'armature additionnelle de renforcement formée d'au moins une nappe d'éléments de renforcement circonférentiels.

Le point A de plus grande largeur axiale est, par définition, le point du profil méridien d'armature de carcasse correspondant au point de plus grande largeur axiale d'armature de carcasse lorsque le pneumatique est monté sur sa jante de service et gonflé à la pression recommandée et non chargé, et la droite D" de plus grande largeur axiale est la droite parallèle à l'axe de rotation et passant par A.

Les éléments de l'armature additionnelle de renforcement sont dits circonférentiels si l'angle qu'ils forment avec la direction circonférentielle est compris entre + 5° et - 5°.

Le tracé convexe du profil méridien de l'armature de carcasse est généralement formé de plusieurs arcs de cercle adjacents, dont les rayons de courbure sont croissants en allant du point A de plus grande largeur axiale au point de tangence T avec la couche d'enrobage quasi-circulaire de la tringle d'ancrage, mais le tracé entre le point A et le point T peut être convexe et circulaire avec un centre de courbure situé sur la droite de plus grande largeur axiale.

La ou les nappes de l'armature additionnelle de renforcement, axialement à l'intérieur de la partie non retournée d'armature de carcasse, auront avantageusement leurs extrémités radialement inférieures radialement au dessous de la droite D', parallèle à l'axe de rotation et passant par le point de la couche d'enrobage de la tringle d'ancrage radialement le plus éloigné de l'axe de rotation, mais au dessus de la droite D, parallèle à l'axe de rotation et passant par le point de la couche d'enrobage de la tringle d'ancrage radialement le plus proche de l'axe de rotation, et des extrémités radialement supérieures situées à une distance radiale de la droite D, comprise entre une quantité égale à la demi-distance radiale entre les droites D et D" augmentée de la demi-distance radiale entre les droites D et D', et une quantité égale à la demi-distance radiale entre les droites D et D" diminuée de la demi-distance radiale entre les droites D et D'.

Cette structure permet ainsi une reprise partielle des efforts de tension méridiens subis par l'armature de carcasse, et ainsi minimise les déformations radiales en extrémités de retournement d'armature de carcasse, quelles que soient les conditions de roulage.

La reprise des efforts sera d'autant plus importante que les éléments de renforcement de l'armature additionnelle seront plus nombreux ; ils seront préférentiellement métalliques, en acier, parallèles entre eux dans la nappe additionnelle et jointifs sur toute la largeur de l'armature de renforcement. Des éléments de renforcement sont dits jointifs, si, dans la direction perpendiculaire aux dits éléments, la distance séparant deux éléments adjacents est réduite au maximum.

La reprise des efforts de tension méridienne d'une armature de carcasse est connue en soi par de nombreux documents. Le brevet FR 750 726 de la demanderesse enseigne le collage des nappes d'armature de carcasse à des armatures auxiliaires, chacune formée de fil enroulé en spirale et présentant en conséquence une flexibilité notable dans le sens transversal. Ledit collage est réalisé de sorte que deux nappes d'armature de carcasse enserrent une armature auxiliaire, ledit enserrement se faisant en l'absence de tringle et de retournement d'armature de carcasse.

Le brevet FR 1 169 474 enseigne aussi de supprimer la tringle usuellement employée par des petites nappes de fils ou câbles métalliques inclinées sur le parallèle d'accrochage, l'angle d'inclinaison pouvant descendre jusqu'à 5°, la (les) nappe(s) d'armature de carcasse étant retournées on non.

Le brevet FR 1 234 995 prévoit le remplacement des éléments de renforcement usuellement obliques de la(des) nappe(s) de renforcement de bourrelet destinée(s) à réduire les mouvements de l'accrochage contre le rebord de jante, par des éléments circonférentiels, l'armature de renforcement pouvant être disposée entre la partie principale de l'armature de carcasse et le retournement de ladite armature, ou axialement à l'extérieur dudit retournement d'armature de carcasse.

Nous retrouvons les mêmes armatures de renforcement de bourrelet à éléments circonférentiels dans le brevet FR 1 256 432, les dits éléments étant destinés à la reprise dans son intégralité des efforts de tension d'armature de carcasse, et dans le cas de pneumatiques pour véhicules de tourisme, en l'absence de tringles d'ancrage ou toute autre nappe de renforcement.

Le document FR 2 055 988 décrit un certain nombre d'applications possibles d'une armature de renforcement de bourrelet à éléments circonférentiels, en particulier l'utilisation d'une telle armature au lieu et place de l'armature usuelle à éléments obliques disposés axialement à l'extérieur du retournement d'armature de carcasse.

Non seulement la combinaison du profil méridien conforme à l'invention avec la présence d'une armature de renforcement de bourrelet, à éléments circonférentiels, et dont au moins une nappe est disposée à l'intérieur de la partie non retournée ou principale de l'armature de carcasse, permet l'amélioration de l'endurance des bourrelets, mais elle permet en outre d'obtenir une très nette diminution du poids d'un pneumatique tout en n'altérant pas ses propriétés, lorsque l'on combine la présence d'une armature de renforcement de bourrelet, décrite ci-dessus, au remplacement de la tringle à fils métalliques rectangulaires, généralement utilisée dans le type de pneumatique considéré, par une tringle plus économique de type tressé, c'est-à-dire formée d'un tressage hélicoïdal de plusieurs fils métalliques, ou une tringle de type paquet à section polygonale, c'est-à-dire une tringle obtenue par l'enroulement sur une forme d'un fil métallique conduisant à plusieurs couches de différentes largeurs. Les types de tringle ci-dessus permettent un moindre encombrement du fait de la forme de leur section transversale, mais aussi du fait que la reprise des efforts par l'armature additionnelle permet une diminution sensible des dites sections . Quelle que soit le type de tringle, tressé ou paquet, la section transversale peut être diminuée de 30 à 50%, ce qui conduit par rapport à l'application de l'invention au cas d'une tringle à fils rectangulaires plus encombrante, à avoir soit une épaisseur de bourrelet plus amincie, soit une épaisseur de bourrelet constante mais avec un profil méridien dit plus tendu, dans le sens où sa convexité est moins prononcée.

L'armature de renforcement de bourrelet ainsi décrite peut être réalisée séparément par enroulement en spirale sur un support horizontal de forme appropriée, et ensuite transférée sur l'ébauche de pneumatique non vulcanisée. La fabrication d'un tel pneumatique sera cependant avantageusement facilitée par l'emploi, à titre d'éléments de renforcement, de tronçons ou d'ensembles ou groupes de tronçons de câbles, de longueur circonférentielle comprise entre 0,2 et 0,4 fois la longueur circonférentielle moyenne de l'armature de renforcement, ce qui permet la pose de l'armature de renforcement de bourrelet sur le tambour de confection de l'ébauche crue d'armature de carcasse et la mise sous forme torique de la dite ébauche sans difficultés majeures, et ladite longueur moyenne étant mesurée à la pose sur ledit tambour de confection. Les interstices ou coupures circonférentielles entre éléments coupés seront préférentiellement décalés les uns par rapport aux autres.

Il peut être aussi avantageux, afin de conférer au bourrelet de pneumatique une rigidité transversale supérieure, tout en permettant une amélioration accrue de l'endurance des bourrelets, que soit présente dans l'armature de renforcement additionnelle au moins une nappe formée d'éléments métalliques circonférentiels et disposée axialement à l'extérieur de la partie non retournée de l'armature de carcasse. La dite nappe additionnelle, axialement à l'extérieur, aura son extrémité radialement supérieure située radialement de la même manière que la ou les nappes axialement à l'intérieur, alors que l'extrémité radialement inférieure de cette deuxième nappe sera avantageusement située entre la droite D' et une droite parallèle à D' radialement à l'extérieur et distante radialement de D' d'une quantité égale à la distance radiale séparant D' de D. Les éléments de renforcement de ladite deuxième nappe seront préférentiellement des tronçons ou ensemble de tronçons de câbles métalliques en acier de longueur circonférentielle au plus égale à 0,4 fois la longueur circonférentielle moyenne de l'armature de renforcement ainsi formée.

Les caractéristiques de l'invention seront mieux comprises à l'aide de la description qui suit et qui se réfère au dessin, illustrant à titre non limitatif des exemples d'exécution, et sur lequel :
- la figure 1 représente schématiquement, vue en section transversale, une structure de pneumatique, connue par l'état de la technique,
- la figure 2 représente schématiquement et en vue agrandie une première variante de bourrelet conforme à l'invention, dans sa version la plus dépouillée,
- la figure 3 représente schématiquement une deuxième variante de bourrelet conforme à l'invention, la tringle étant une tringle tressée, et avec une armature de renforcement de bourrelet à deux nappes.

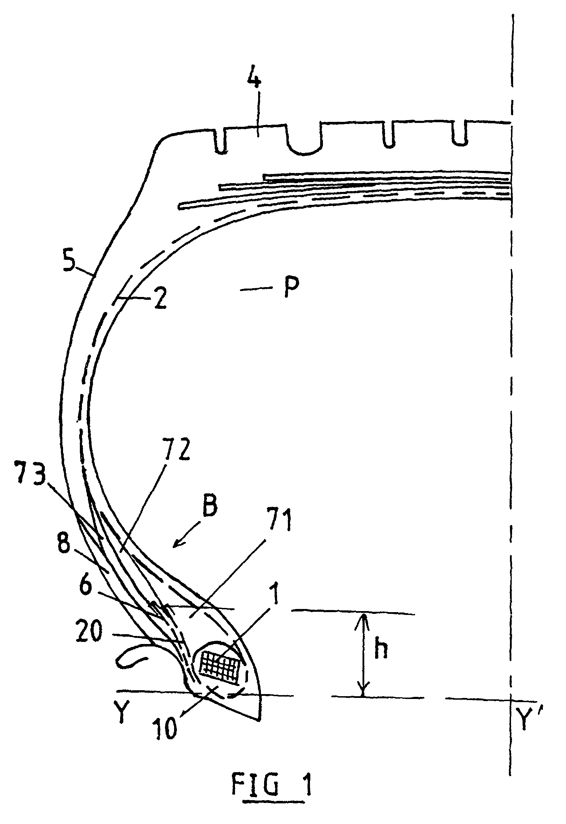

Le pneumatique P représenté sur la figure 1 est un pneumatique de dimension 315/80 R 22,5, destiné à être monté sur une jante comportant des sièges de jante inclinés à 15°. Ledit pneumatique comprend une bande de roulement (4) réunie à deux bourrelets B par l'intermédiaire de deux flancs (5). Chaque bourrelet B est renforcé par une tringle (1) formée par l'enroulement sur une forme appropriée d'un fil à section quadrilatère jusqu'à obtention de plusieurs rangées de fils radialement juxtaposées. Autour de ladite tringle (1) est ancrée une armature de carcasse (2), composée d'une seule nappe de câbles métalliques. L'ancrage se fait par un retournement (20) autour de la couche (10) de mélange caoutchouteux qui recouvre la tringle (1), la distance radiale h, séparant l'extrémité radialement supérieure dudit retournement (20) de la droite YY' parallèle à l'axe de rotation et définissant le diamètre nominal du bourrelet (qui est le même, dans le cas décrit, que le diamètre de la jante de service), étant égale, dans l'exemple étudié du pneumatique de dimension 315/80 R 22.5, à 37 mm. Entre l'armature de carcasse (2) et son retournement (20), radialement au dessus de la tringle (1), est disposé un bourrage tringle (71) en mélange caoutchouteux de dureté Shore généralement élevée. Axialement à l'extérieur du retournement (20), se trouve une nappe de renforcement (6) formée de câbles métalliques inextensibles faiblement orientés par rapport à la direction circonférentielle, et dont l'extrémité radialement supérieure est plus éloignée de l'axe de rotation que l'extrémité supérieure du retournement (20) d'armature de carcasse (2). Ladite nappe (6) est séparée du bourrage tringle (71) par un deuxième bourrage (72) de remplissage, et du mélange caoutchouteux de protection (8), qui entoure le bourrelet B, par un profilé de mélange caoutchouteux (73).

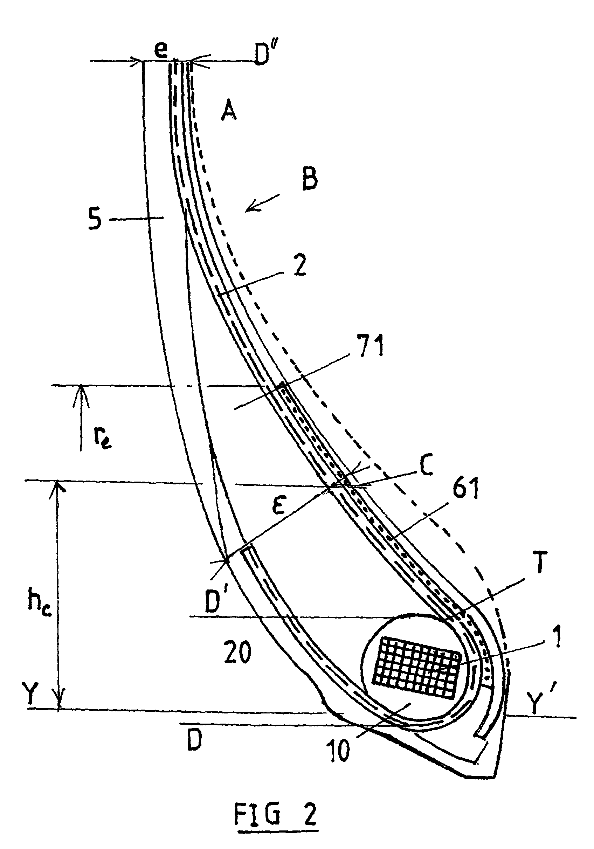

Le bourrelet B du pneumatique de même dimension, conforme à l'invention et montré sur la figure 2, est, de manière identique, renforcé par une tringle (1) à fils rectangulaires, et entouré d'une couche (10) de mélange caoutchouteux à haut module d'élongation, autour de laquelle vient s'ancrer l'armature de carcasse (2) pour former un retournement (20). Ledit bourrelet B présente en combinaison les deux caractéristiques essentielles suivantes : l'armature de carcasse (2) possède, vue en section méridienne, un profil méridien, entre le point A de plus grande largeur axiale et le premier point de tangence T dudit profil avec la couche d'enrobage (10) quasi-circulaire de la tringle (1), qui est de manière continue convexe, et l'armature de renforcement de bourrelet (6), composée, dans l'example décrit, d'une seule nappe (6) d'éléments circonférentiels, est placée axialement à l'intérieur de la partie non retournée de l'armature de carcasse (2) et non axialement à l'extérieur du retournement (20) de l'armature de carcasse (2). La convexité du profil méridien, continue du point A au point T, permet, par rapport au pneumatique de l'art antérieur avec un tracé de profil passant de convexe à concave, permet un amincissement non négligeable du bourrelet B. Si nous considérons l'épaisseur ε du bourrelet comme étant la distance, mesurée sur une perpendiculaire au profil méridien d'armature de carcasse abaissée du point C dudit profil méridien de hauteur h_{C}, comprise entre 30 et 40 mm et mesurée par rapport à la droite YY', le bourrelet, conforme à l'invention, a une épaisseur égale à 2,9 fois l'épaisseur e du flanc, mesurée sur la droite D" parallèle à l'axe de rotation et de plus grande largeur axiale, alors que le bourrelet B du pneumatique de la figure 1 a une épaisseur, mesurée dans les mêmes conditions, égale à 3,4 fois l'épaisseur e. Ledit amincissement, visualisé sur la figure 2 par la différence des tracés des parois intérieures respectivement d'un pneumatique de l'art antérieur et d'un pneumatique conforme à l'invention, ne peut donner de résultats satisfaisants que si le bourrelet B est renforcé par au moins une nappe additionnelle de renforcement (61) d'éléments à haut module d'élasticité et disposés circonférentiellement, ladite nappe (61) étant située axialement à l'intérieur de l'armature de carcasse (2) dont le profil méridien est convexe. Les éléments de renforcement de la nappe (61) sont des tronçons de câbles 27 x 23. métalliques, la longueur desdits éléments ou tronçons de câbles étant égale au quart de la longueur circonférentielle de ladite nappe (61) mesurée lors de sa pose sur le tambour de confection de l'ébauche d'armature de carcasse. Les espaces entre extrémités d'éléments sont de faible amplitude : 3 mm (mesurés aussi lors de la pose) et sont décalés circonférentiellement entre eux.

L'extrémité radialement inférieure de la nappe (61) est sensiblement disposée sur une droite parallèle à l'axe de rotation et passant par le point de la tringle (1) le plus proche de l'axe de rotation, point qui est situé à une distance de l'axe de rotation de 290 mm, comprise entre la distance de 280 mm séparant de l'axe de rotation la droite D passant par le point de la couche d'enrobage (10) de la tringle d'ancrage (1) le plus proche de l'axe de rotation et la distance de 305 mm séparant de l'axe de rotation la droite D' passant par le point de la couche d'enrobage (10) le plus éloigné dudit axe de rotation.

Quant à l'extrémité radialement supérieure, elle est située radialement, dans le cas décrit, à une distance rₑ de l'axe de rotation égale à 335 mm, quantité qui est comprise entre une quantité de 357,5 mm, égale à la demi-somme de 345 mm des distances respectives à l'axe de rotation des droites D et D" (410 + 280)/2, la droite D" de plus grande largeur axiale passant par le point A étant à 410 mm de l'axe de rotation) augmentée de la demi-distance radiale de 12,5 mm entre les droites D et D' (305- 280)/2, et une quantité de 332,5 mm, égale à la demi-somme 345 mm des distances respectives à l'axe de rotation des droites D et D" diminuée de la demi-distance radiale de 12,5 mm entre les droites D et D'. Le bourrelet B est complété par un bourrage (71) unique et radialement au-dessus de la tringle (1) et par une couche de protection (8).

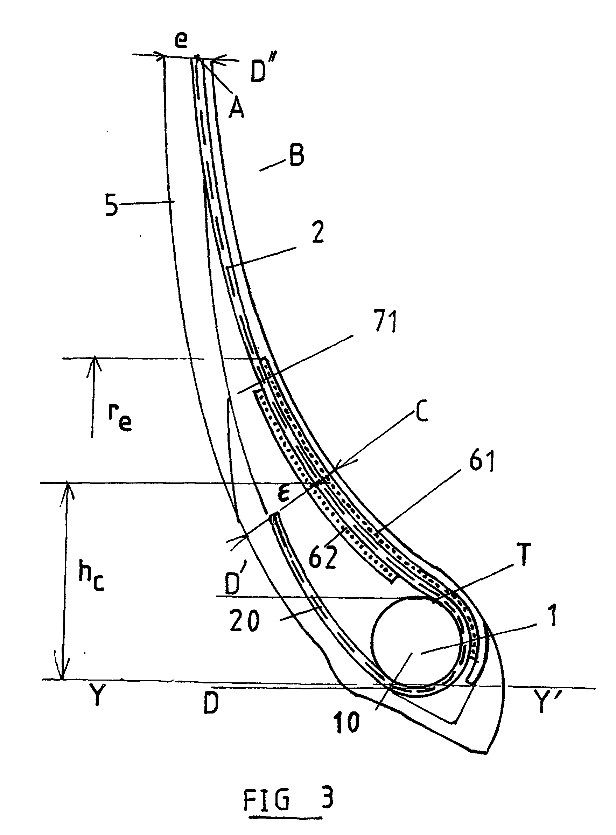

Le bourrelet B, montré sur la figure 3 diffère de celui montré sur la figure 2, d'une part par le fait que la tringle (1) d'ancrage de l'armature de carcasse (2) est une tringle de type "tressé" (elle pourrait être du type "paquet"), ce qui permet un gain de poids, un encombrement moindre tout en conservant une section transversale efficace de tringle sensiblement constante, et un abaissement du prix de revient du pneumatique, et d'autre part par le fait que l'armature de renforcement (6) additionnelle de bourrelet comprend deux nappes (61) et (62) d'éléments de renforcement coupés. Si l'on compare le bourrelet de la figure 3 à celui de la figure 2, et en particulier les profils méridiens respectifs d'armature de carcasse, il est nettement visible que l'épaisseur ε du bourrelet, distance toujours mesurée sur la perpendiculaire au profil méridien d'armature de carcasse abaissée du même point C dudit profil méridien , est plus faible et égale dans cet exemple à 2,5 fois l'épaisseur e du flanc de 8,9 mm, mesurée sur la droite D" parallèle à l'axe de rotation et de plus grande largeur axiale.

La première nappe additionnelle de renforcement (61) est, comme ci-dessus, axialement à l'intérieur du profil convexe de la partie non retournée d'armature de carcasse (2), alors que la seconde nappe (62) est axialement à l'extérieur dudit profil. La continuité radiale des rigidités de cette partie de pneumatique est assurée par la non concordance des extrémités respectives des deux nappes (61) et (62), les extrémités de la première nappe (61) restant dans les limites précédemment définies ; cependant, l'extrémité radialement supérieure de la deuxième nappe (62) est radialement située au dessous de l'extrémité radialement supérieure de la première nappe (61), alors que l'extrémité radialement inférieure de la deuxième nappe (62) est très légèrement au dessus de la droite D'.

Des pneumatiques P_{C} conformes à l'invention et tels que décrits dans le passage de la description correspondant à la figure 2, ont été comparés :
- à des pneumatiques usuels P_{T}, c'est à dire comprenant des bourrelets d'épaisseur usuelle et où la nappe de renforcement de bourrelet est une nappe de câbles métalliques continus orientés à 22° par rapport à la direction circonférentielle et disposée axialement à l'extérieur du retournement d'armature de carcasse, telle que montrée sur la figure 1 du dessin, et
- à des pneumatiques P_{A}, comprenant des bourrelets à épaisseur normale, mais avec une nappe de renforcement de bourrelet positionnée axialement à l'intérieur de l'armature de carcasse et formée des mêmes tronçons de câbles, orientés circonférentiellement, et
- à des pneumatiques P_{B} comprenant des bourrelets à épaisseur amoindrie avec une nappe de renforcement de bourrelet disposée axialement à l'extérieur du retournement d'armature de carcasse, et formée de câbles métalliques continus orientés d'un angle de 22° par rapport à la direction circonférentielle.

La comparaison s'est réalisée sur deux critères de qualité, fondamentaux pour l'endurance des bourrelets de pneumatiques : l'endurance sous une surcharge, et l'endurance sur jante chauffante. Dans les mêmes conditions de roulage pour toutes les enveloppes testées, les pneumatiques usuels P_{T} font en moyenne (2 pneumatiques testés par catégorie) 53 000 km en roulage avec surcharge surchargé et 5 200 km en roulage jante chauffante. Les pneumatiques P_{A} ont réalisé respectivement 101 000 km et 8 100 km, alors que les pneumatiques P_{B} réalisaient 32 000 km et 3 300 km respectivement, et les pneumatiques P_{C}, conformes à l'invention, 105 000 km et 8 200 km. Les résultats ci-dessus mettent parfaitement en valeur l'effet bénéfique du remplacement de l'armature de renforcement, d'éléments à angle, sur le retournement d'armature de carcasse par une armature de renforcement d'éléments circonférentiels discontinus axialement à l'intérieur de la partie principale de l'armature de carcasse. Plus encore les dits résultats mettent en valeur l'effet de synergie manifeste existant entre les deux paramètres que sont l'épaisseur du bourrelet et le choix judicieux des structure et position de l'armature de renforcement de bourrelet : par exemple en roulage sur jante chauffante, si l'armature de renforcement à câbles circonférentiels discontinus placée à l'intérieur de l'armature de carcasse permet un gain de moyen de 2 900 km dans le cas d'un bourrelet à épaisseur usuelle, le même changement permet un gain de 4 900 km dans le cas d'un bourrelet aminci. Il en est de même des résultats en roulage sous surcharge : le changement d'armature de renforcement provoque un gain de 48 000 km dans le cas d'un bourrelet à épaisseur usuel, alors que le même changement provoque un gain de 73 000 km, c'est-à-dire presque le double, dans le cas d'un bourrelet aminci. Cet effet de synergie, insoupçonné jusqu'alors, permet de conférer à un pneumatique dont les bourrelets présentent la combinaison de paramètres décrits, une endurance très nettement supérieure à ce qui est connu aujourd'hui, tout en permettant un allégement du poids total du pneumatique et une légère diminution de son prix de revient.

## Revendications

1. Pneumatique, comprenant au moins une armature de carcasse radiale (2), formée d'au moins une nappe (2) d'éléments de renforcement inextensibles et ancrée dans chaque bourrelet B à une tringle (1) pour former un retournement (20), chaque bourrelet B étant renforcé par une armature de renforcement additionnelle (6) d'au moins une nappe (61) formée d'éléments métalliques, disposée axialement à l'intérieur de la partie non retournée de ladite armature de carcasse (2), **caractérisé en ce que**, vue en section méridienne, l'armature de carcasse (2) a un profil méridien dont le tracé, compris entre le point A de plus grande largeur axiale et le point de tangence T avec la couche d'enrobage (10) quasi-circulaire de la tringle d'ancrage (1), est convexe sur toute sa longueur, et tel que l'épaisseur ε du bourrelet B, mesurée sur une perpendiculaire audit profil méridien en un point C de hauteur h_{C}, comprise entre 30 et 40 mm et mesurée par rapport à la base de bourrelet YY', soit comprise entre 2,5 et 3,0 fois l'épaisseur e du flanc mesurée sur la droite D" de plus grande largeur axiale, ladite armature de carcasse (2) étant renforcée dans sa partie non retournée, par l'armature additionnelle de renforcement (6) formée d'au moins une nappe (61) d'éléments de renforcement circonférentiels.

2. Pneumatique selon le revendication 1, **caractérisé en ce que** la (les) nappe(s) (61) de l'armature additionnelle de renforcement (6), axialement à l'intérieur de la partie non retournée d'armature de carcasse (2), a (ont) avantageusement son (leurs) extrémité(s) radialement inférieure(s) radialement au dessous de la droite D', parallèle à l'axe de rotation et passant par le point de la couche d'enrobage (10) de la tringle d'ancrage (1) radialement le plus éloigné de l'axe de rotation, mais au dessus de la droite D, parallèle à l'axe de rotation et passant par le point de la couche d'enrobage (10) de la tringle d'ancrage (1) radialement le plus proche de l'axe de rotation, et une (des) extrémité(s) radialement supérieure(s) située(s) à une distance radiale de la droite D, comprise entre une quantité égale à la demi-distance radiale entre les droites D et D" augmentée de la demi-distance radiale entre les droites D et D', et une quantité égale à la demi-distance radiale entre les droites D et D" diminuée de la demi-distance radiale entre les droites D et D'.

3. Pneumatique selon l'une des revendications 1 ou 2, **caractérisé en ce que** l'armature de renforcement additionnelle (6) comprend en outre au moins une nappe (62), formée d'éléments métalliques circonférentiels et disposée axialement à l'extérieur de la partie non retournée de l'armature de carcasse (2), ladite nappe additionnelle (62), ayant son extrémité radialement supérieure située radialement de la même manière que la ou les nappes (61) axialement à l'intérieur, alors que son extrémité radialement inférieure est située entre la droite D' et une droite parallèle à D' radialement à l'extérieur, distante radialement de D' d'une quantité égale à la distance radiale séparant D' de D.

4. Pneumatique selon l'une des revendications 1 à 3, **caractérisé en ce que** les éléments de renforcement circonférentiels de l'armature additionnelle (6) sont métalliques, en acier, et jointifs sur toute la largeur de ladite armature.

5. Pneumatique selon l'une des revendications 1 à 4, **caractérisé en ce que** la tringle d'ancrage (1) de l'armature de carcasse (2) est une tringle de type "tressé".

6. Pneumatique selon l'une des revendications 1 à 5, **caractérisé en ce que** les éléments de renforcement de l'armature (6) de renforcement sont des tronçons ou des ensembles de tronçons de câbles, de longueur circonférentielle comprise entre 0,2 et 0,4 fois la longueur circonférentielle moyenne de l'armature, mesurée à la pose sur le tambour de confection de l'ébauche de carcasse.

7. Pneumatique selon la revendication 6, **caractérisé en ce que** les interstices ou coupures circonférentielles entre tronçons coupés étant décalés les uns par rapport aux autres.

## Patentansprüche

1. Luftreifen mit mindestens einer radialen Karkassenbewehrung (2), die aus mindestens einer Lage (2) aus undehnbaren Verstärkungselementen gebildet und in jedem Wulst B an einem Wulstkern (1) verankert ist, um einen Umschlag (20) zu bilden, wobei jeder Wulst B durch eine zusätzliche Verstärkungsbewehrung (6) aus mindestens einer Lage (61) verstärkt ist, die aus metallischen Elementen gebildet ist und axial im Inneren des nicht umgeschlagenen Teils der genannten Karkassenbewehrung (2) angeordnet ist, **dadurch gekennzeichnet, daß**, im Meridianschnitt gesehen, die Karkassenbewehrung (2) ein Meridianprofil hat, dessen Verlauf, zwischen dem Punkt A größter axialer Breite und dem Tangentenpunkt T mit der gewissermaßen kreisförmigen Umhüllungsschicht (10) des Verankerungs-Wulstkemes (1) genommen, über seine gesamte Länge konvex ist, und so, daß die Dicke ε des Wulstes B, gemessen auf einer Senkrechten zum genannten Meridianprofil in einem Punkt C mit der Höhe h_{c}, die zwischen 30 und 40 mm liegt, und gemessen in Bezug auf die Basis des Wulstes YY', zwischen dem 2,5-fachen und dem 3,0-fachen der Dicke e der Flanke liegt, gemessen auf der Geraden D" größter axialer Breite, wobei die genannte Karkassenverstärkung (2) in ihrem nicht umgeschlagenen Teil durch die zusätzliche Verstärkungsbewehrung (6) verstärkt ist, die aus mindestens einer Lage (61) aus Umfangs-Verstärkungselementen gebildet ist.

2. Reifen nach Anspruch 1, **dadurch gekennzeichnet, daß** die Lage(n) (61) der zusätzlichen Verstärkungsbewehrung (6) axial auf der Innenseite des nicht umgeschlagenen Teils der Karkassenbewehrung (2) vorteilhafterweise mit ihrem bzw. ihren radial unteren Ende(n) unter der Geraden D', die parallel zur Drehachse verläuft und durch den Punkt der Umhüllungsschicht (10) des Verankerungswulstkernes (1) hindurchläuft, der radial am weitesten von der Drehachse entfernt ist, aber über der Geraden D, die parallel zur Drehachse verläuft und durch den Punkt der Umhüllungsschicht (10) des Verankerungswulstkernes (1) hindurchläuft, der radial der Drehachse nächstgelegen ist, und mit ihrem bzw. Ihren radial oberen Ende(n) in einem radialen Abstand zur Geraden D liegt bzw. liegen, der zwischen einer Größe gleich dem halben radialen Abstand zwischen den Geraden D und D", erhöht durch den halben radialen Abstand zwischen den Geraden D und D', und einer Größe gleich dem halben, radialen Abstand zwischen den Geraden D und D" liegt, vermindert um den halben, radialen Abstand zwischen den Geraden D und D'.

3. Reifen nach einem der Ansprüche 1 oder 2, **dadurch gekennzeichnet, daß** die zusätzliche Verstärkungsbewehrung (6) außerdem mindestens eine Lage (62) aufweist, die aus metallischen, im Umfangsrichtung verlaufenden Elementen gebildet ist und axial auf der Außenseite des nicht umgeschlagenen Teils der Karkassenbewehrung (2) angeordnet ist, wobei die genannte, zusätzliche Lage (62), die mit ihrem radial oberen Ende radial in der gleichen Weise wie die axial inneren Lage(n) (61) liegt, während ihr radial unteres Ende zwischen der Geraden D' und einer Geraden parallel zu D' radial auf der Außenseite liegt, die radial von D' um eine Größe beabstandet ist, die gleich ist dem radialen Abstand, der D' von D trennt.

4. Reifen nach einem der Ansprüche 1 bis 3, **dadurch gekennzeichnet, daß** die sich in Umfangsrichtung erstreckenden Verstärkungselemente der zusätzlichen Bewehrung (6) metallisch sind, aus Stahl bestehen und über die gesamte Breite der genannten Bewehrung aneinanderliegen.

5. Reifen nach einem der Ansprüche 1 bis 4, **dadurch gekennzeichnet, daß** der Verankerungs-Wulstkern (1) der Karkassenbewehrung (2) ein Wulstkern der "geflochtenen" Art ist.

6. Reifen nach einem der Ansprüche 1 bis 5, **dadurch gekennzeichnet, daß** die Verstärkungselemente der Verstärkungsbewehrung (6) Stücke oder Gruppen von Stücken von Seilen sind, mit einer Länge in Umfangsrichtung, die zwischen dem 0,2-fachen und dem 0,4-fachen der mittleren Umfangslänge der Bewehrung liegt, gemessen beim Auflegen auf die Konfektionstrommel des Karkassenrohlings.

7. Reifen nach Anspruch 6, **dadurch gekennzeichnet, daß** die am Umfang vorgesehenen, kleinen Zwischenräume oder Einschnitte zwischen den zugeschnittenen Stücken zueinander versetzt sind.

## Claims

1. A tyre, comprising at least one radial carcass reinforcement (2), which is formed of at least one ply (2) of inextensible reinforcement elements and is anchored within each bead B to a bead wire (1) to form an upturn (20), each bead B being reinforced by an additional reinforcement armature (6) of at least one ply (61) formed of metal elements and arranged axially to the inside of the non-upturned part of said carcass reinforcement (2), **characterised in that**, viewed in meridian section, the carcass reinforcement (2) has a meridian profile the trace of which between the point A of greatest axial width and the point of tangency T with the virtually circular coating layer (10) of the anchoring bead wire (1), is convex over its entire length, and such that the thickness ε of the bead B, measured on a line perpendicular to said meridian profile at a point C of height h_{c} of between 30 and 40 mm and measured relative to the base of the bead YY', is between 2.5 and 3.0 times the thickness e of the sidewall measured on the straight line D" of greatest axial width, said carcass reinforcement (2) being reinforced, in its non-upturned part, by the additional reinforcement armature (6) formed of at least one ply (61) of circumferential reinforcement elements.

2. A tyre according to Claim 1, **characterised in that** the ply (plies) (61) of the additional reinforcement armature (6), axially to the inside of the non-upturned part of the carcass reinforcement (2), advantageously has (have) its (their) radially lower end(s) radially below the straight line D', parallel to the axis of rotation and passing through that point of the coating layer (10) of the anchoring bead wire (1) which is radially farthest from the axis of rotation, but above the straight line D which is parallel to the axis of rotation and passes through that point of the coating layer (10) of the anchoring bead wire (1) which is radially closest to the axis of rotation, and one (several) radially upper end(s) located at a radial distance from the straight line D of between a quantity equal to half the radial distance between the straight lines D and D", increased by half the radial distance between the straight lines D and D', and a quantity equal to half the radial distance between the straight lines D and D", reduced by half the radial distance between the straight lines D and D'.

3. A tyre according to one of Claims 1 or 2, **characterised in that** the additional reinforcement armature (6) furthermore comprises at least one ply (62), formed of circumferential metal elements and arranged axially to the outside of the non-upturned part of the carcass reinforcement (2), said additional ply (62) having its radially upper end located radially in the same manner as the ply or plies (61) axially to the inside, whereas its radially lower end is located between the straight line D' and a straight line parallel to D' radially to the outside and radially distant from D' by an amount equal to the radial distance between D' and D.

4. A tyre according to one of Claims 1 to 3, **characterised in that** the circumferential reinforcement elements of the additional armature (6) are metal ones, made of steel, and adjoining over the entire width of said armature.

5. A tyre according to one of Claims 1 to 4, **characterised in that** the anchoring bead wire (1) of the carcass reinforcement (2) is a bead wire of "braided" type.

6. A tyre according to one of Claims 1 to 5, **characterised in that** the reinforcement elements of the reinforcement armature (6) are lengths or assemblies of lengths of cables, of a circumferential length of between 0.2 and 0.4 times the average circumferential length of the armature, measured upon laying on the building drum for the carcass blank.

7. A tyre according to Claim 6, **characterised in that** the circumferential gaps or cuts between cut lengths are offset from each other.
